Europäisches Patentamt

European Patent Office

Office européen des brevets

(19)

(11) Numéro de publication : **0 152 327**
**B1**

(12) **FASCICULE DE BREVET EUROPÉEN**

(45) Date de publication du fascicule du brevet :
**28.03.90**

(21) Numéro de dépôt : **85400137.7**

(22) Date de dépôt : **28.01.85**

(51) Int. Cl.⁵ : **G 11 B 5/60**, G 11 B 5/10,
**G 11 B 5/17**, G 11 B 5/127

(54) **Procédé de réalisation de dispositifs d'écriture et de lecture à structure intégrée pour enregistrement magnétique.**

(30) Priorité : **03.02.84 FR 8401882**

(43) Date de publication de la demande :
**21.08.85 Bulletin 85/34**

(45) Mention de la délivrance du brevet :
**28.03.90 Bulletin 90/13**

(84) Etats contractants désignés :
**BE CH DE FR GB IT LI NL**

(56) Documents cités :
**EP—A— 0 032 230**
**DE—A— 2 114 930**
**JP—A— 5 798 118**
**US—A— 3 657 806**
**IBM TECHNICAL DISCLOSURE BULLETIN, vol. 22, no. 1, juin 1979, page 331, New York, US; J.W. BECK et al.: "Magnetic head assembly including head circuitry"**
**PATENTS ABSTRACTS OF JAPAN, vol. 7, no. 228 (P-228)[1373], 8 octobre 1983; & JP - A - 58 118 016 (SUWA SEIKOSHA K.K.) 13-07-1983**
**PATENTS ABSTRACTS OF JAPAN, vol. 7, no. 228 (P-228)[1373], 8 octobre 1983; & JP - A - 58 118 017 (SUWA SEIKOSHA K.K.) 13-07-1983**
**PATENTS ABSTRACTS OF JAPAN, vol. 2, no. 104, 26 août 1978, page 5446E78; & JP - A - 53 69623 (FUJITSU K.K.) 21-06-1978**
**IBM TECHNICAL DISCLOSURE BULLETIN, vol. 25, no. 7A, décembre 1982, page 3173, Armonk, New York, US; G. KAUS et al.: "Sliders for magnetic heads of surface-hardened silicon with integrated electronic components"**

(73) Titulaire : **COMMISSARIAT A L'ENERGIE ATOMIQUE**
**31/33, rue de la Fédération**
**F-75015 Paris (FR)**

(72) Inventeur : **Lazzari, Jean-Pierre**
**45, Chemin de Malanot**
**F-38700 Corenc (FR)**

(74) Mandataire : **Mongrédien, André et al**
**c/o BREVATOME 25, rue de Ponthieu**
**F-75008 Paris (FR)**

IBM TECHNICAL DISCLOSURE BULLETIN, vol. 15, no. 7, décembre 1972, pages 2183-2184, Armonk, New York, US; W.A. WARWICK: "Multilayer ceramic slider for thin-film heads"

IBM TECHNICAL DISCLOSURE BULLETIN, vol. 12, no. 12, mai 1970, page 2167, Armonk, New York, US; T.W. COLLINS: "Integrated read preamplifier and crash detector for disk file"

IBM TECHNICAL DISCLOSURE BULLETIN, vol. 25, no. 7A, décembre 1982, page 3266, Armonk, New York, US; J.E. HITCHNER et al.: "Magnetic head assembly and electronic circuitry"

PATENTS ABSTRACTS OF JAPAN, vol. 1, no. 103, 13 septembre 1977, page 3310E77; & JP - A - 52 36016 (HITACHI SEISAKUSHO K.K.) 19-03-1977

IBM TECHNICAL DISCLOSURE BULLETIN, vol. 13, no. 2, juillet 1970, pages 562-564, Armonk, New York, US; I.M. CROLL et al.: "Batch fabricated permalloy recording heads"

## Description

La présente invention a pour objet un procédé de réalisation de dispositifs d'écriture et de lecture à structure intégrée pour enregistrement magnétique. Elle trouve une application dans la réalisation de mémoires à disques pour ordinateurs.

Une mémoire à disque comprend schématiquement un support revêtu d'une couche magnétique dans laquelle les informations peuvent être écrites ou lues par une tête magnétique. En fonctionnement, le disque magnétique tourne à grande vitesse et, pendant sa rotation, il entraîne un film d'air. La tête magnétique est montée sur un support appelé patin, qui grâce à un profil adéquat, vole littéralement sur le film d'air, à faible distance au-dessus de la couche d'enregistrement.

La tête est reliée électriquement à un circuit électronique, qui assure diverses fonctions comme une préamplification, une amplification, une sélection écriture-lecture, etc.

Pour réduire la longueur des connexions entre la tête et le circuit intégré, ainsi que pour augmenter le rapport signal sur bruit, et la bande passante de l'ensemble, il a été proposé de rassembler, sur un même support en silicium, convenablement profilé en forme de patin, à la fois la tête d'écriture-lecture et le circuit électronique associé. Ce dernier est alors réalisé par les techniques habituelles propres à la technologie des semi-conducteurs.

Un tel dispositif intégré est décrit par exemple dans un article de J. W. Beck et al. publié dans la revue IBM Technical Disclosure Bulletin, vol. 22, n° 1, juin 1979 ainsi que dans l'abrégé de brevet japonais publié dans Patents Abstracts of Japan, vol. 7, N° 228 (p-228), 8 octobre 1983, correspondant à la demande japonaise JP-A-58117016 (SUWA Seikosha K.K.) (13.07.83).

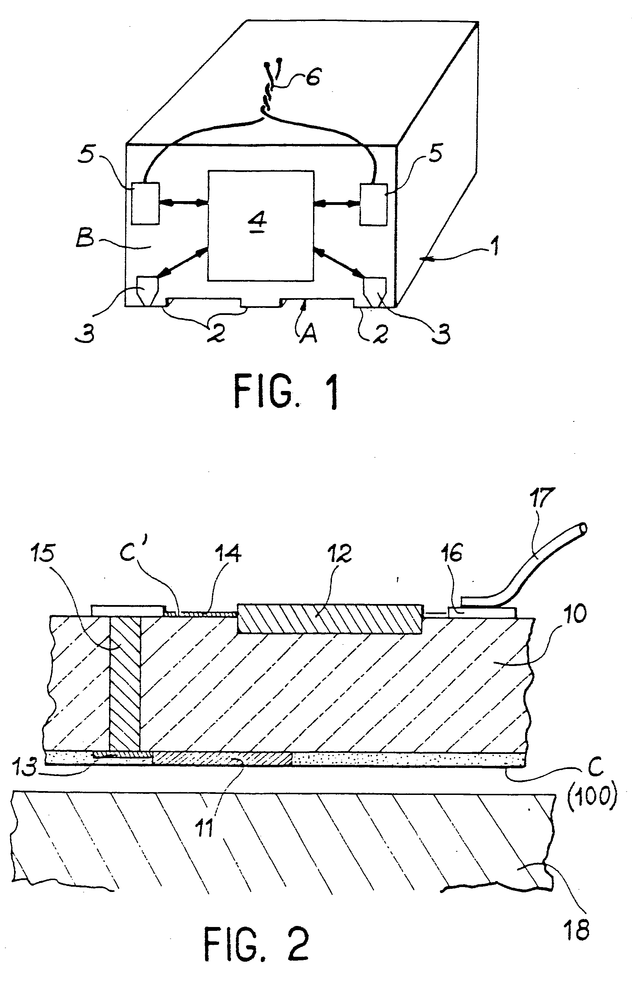

La figure 1 montre schématiquement un dispositif conforme à cet art antérieur. Un patin 1 en silicium contient des rails 2 gravés sur une surface 1 constituant la surface de vol. Des têtes d'écriture-lecture 3 sont déposées sur une face transversale B du patin. Un circuit intégré 4 est réalisé sur cette même face B et est relié aux têtes. Le circuit intégré peut être obtenu par diffusion dans le silicium. Les connexions électriques avec l'extérieur utilisent des plots 5 reliés à des conducteurs 6.

Bien que satisfaisant à certains égards, un tel dispositif présente néanmoins des inconvénients. En effet, pour le réaliser, il faut partir d'un bloc de silicium, sur la face B duquel on dépose des circuits intégrés et des têtes d'écriture-lecture. Ce bloc doit ensuite être taillé selon des plans perpendiculaires à la face B. La face de vol A est ensuite constituée par gravure. Cela signifie donc que, dans l'art antérieur, il faut utiliser des blocs de silicium de grande épaisseur (4 à 5 mm) et qu'il faut travailler ce bloc sur deux faces rectangulaires, ce qui nécessite un équipement complexe.

Le document IBM Technical Disclocure Bulletin, vol. 13, n° 2, juillet 1970 décrit une tête comprenant une couche magnétique obtenue par croissance électrolytique d'un matériau magnétique autour d'une bande mince de « resist » déposée sur du cuivre, cette bande mince définissant l'entrefer (« gap »).

Le document JP-A-5798118 décrit un procédé de réalisation d'une tête magnétique dans lequel on forme la partie inférieure de la tête puis les éléments supérieurs (couche magnétique, bobinage), puis on vient coller le sous-ensemble sous une plaquette de silicium.

Ces procédés sont complexes et ne permettent pas d'obtenir des entrefers étroits avec la précision requise. Par ailleurs, ils ne se prêtent pas à des procédés industriels de production en masse.

La présente invention a pour but de remédier à tous ces inconvénients. A cette fin, elle préconise un procédé tel qu'il est possible d'utiliser des plaquettes de silicium standard très minces, telles qu'on les rencontre dans la technologie des circuits intégrés à semi-conducteurs, et qu'il suffit de travailler cette plaquette sur un seul type de face. Par ailleurs, le procédé met en œuvre des processus qui autorisent une production de masse. Le coût des dispositifs obtenus s'en trouve considérablement diminué.

Tous ces buts sont atteints par un procédé tel qu'il est défini à la revendication 1.

Il faut observer finalement que l'utilisation, comme plan de vol d'un patin, d'une face d'orientation cristallographique 100 d'une plaquette de silicium est en soit connue. Une telle disposition est décrite par exemple dans l'abrégé de brevet japonais publié dans Patents Abstracts of Japan, vol. 1, n° 103, 13 septembre 1977, page 3310 E 77 correspondant à la demande de brevet japonais JP-A-52236016 (Hatichi Seisakusho K.K.) (19.03.77).

Mais cette disposition n'est pas combinée avec l'utilisation de têtes magnétiques et d'un circuit intégré sur cette même face 100. Dans le document cité, les têtes magnétiques sont disposées sur une face latérale du patin (ce qui correspond à la face B de la figure 1) et il n'est pas question d'intégrer au support un circuit intégré (lequel serait d'ailleurs, le cas échéant, nécessairement disposé sur la même face B).

Il faut noter également la demande de brevet EP-A-0152326 déposé au nom du Demandeur pour un procédé de réalisation d'une tête magnétique d'écriture.

De toutes façons, les caractéristiques et avantages de l'invention apparaîtront mieux après la description qui suit, d'exemples de réalisation donnés à titre explicatif et nullement limitatif. Cette description se réfère à des dessins annexés, sur lesquels :

— la figure 1, déjà décrite, représente un dispositif selon l'art antérieur,

— la figure 2 représente, en coupe, un dispositif obtenu par le procédé selon l'invention,

— les figures 3 à 6 illustrent un procédé de réalisation selon l'invention d'une tête magnétique d'écriture et de lecture sur la face 100 d'une plaquette de silicium.

Le dispositif représenté sur la figure 2 comprend une plaquette de silicium (10) comprenant deux faces C et C' d'orientation cristallographique 100. Sur la face C se trouve disposée une tête magnétique d'écriture et de lecture 11. Sur la face C' se trouve un circuit intégré 12. La tête 11 possède des connexions d'entrée-sortie 13 et le circuit 11 des connexions 14. Ces connexions sont reliées entre elles par une connexion 15 traversant de part en part la plaquette de silicium, selon une technique que l'on rencontre couramment dans les structures multicouches. Ces connexions peuvent en particulier être réalisées en couches conductrices minces. Le circuit intégré comprend encore un ou des plots de sortie 16 relié (s) à des fils de liaisons 17. L'ensemble est disposé devant un support d'enregistrement 18. La face C de la plaquette 10 constitue donc le plan de vol du patin. Cette face peut être gravée selon un profil quelconque (rails, rainures, catamaran, etc.).

Naturellement, on ne sortirait pas du cadre de l'invention en disposant le circuit intégré 12 sur la face C, à côté de la tête. Dans ce cas, les connexions s'effectuent sur cette même face C et c'est la connexion du circuit intégré avec l'extérieur qui représente un canal traversant la plaquette de silicium.

Pour réaliser un tel dispositif, on a donc les étapes suivantes :

— réalisation, sur la face 100 d'une plaquette de silicium, de circuits intégrés amplificateur de lecture et/ou d'écriture, par les procédés de diffusion,

— réalisation sur la même face ou sur la face opposée, de têtes d'écriture et de lecture à structure horizontale,

— réalisation d'interconnexions nécessaires entre une tête d'écriture et de lecture, et le circuit intégré associé,

— réalisation des profils de vol sur la face portant les têtes d'écriture-lecture,

— découpe des divers patins et assemblage de chaque patin sur un ressort de maintien.

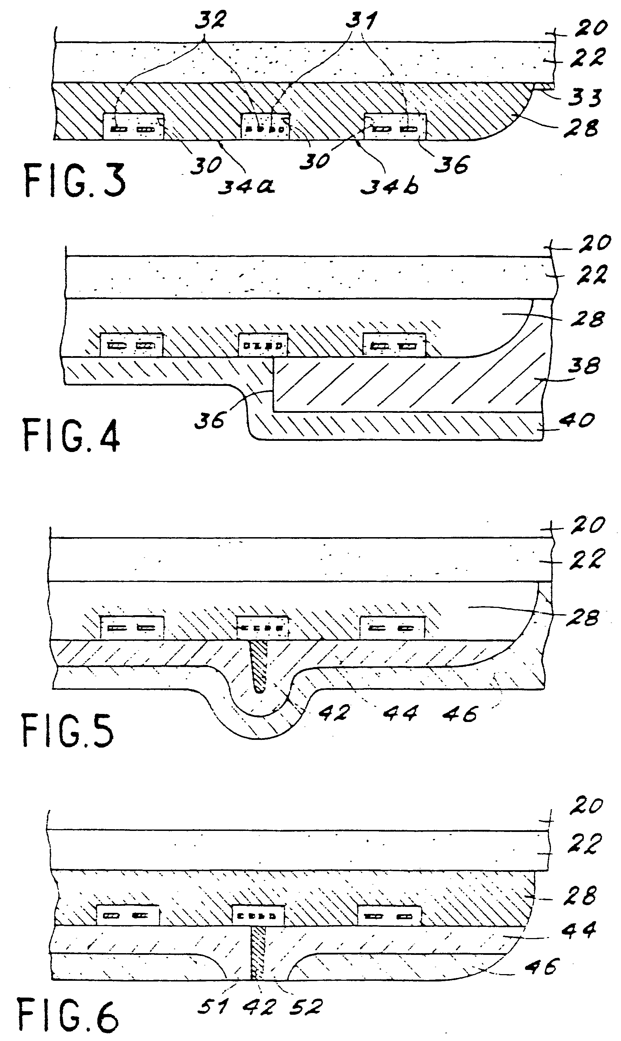

La tête magnétique d'écriture et de lecture qui, selon l'invention, se trouve sur le plan de vol, doit présenter, de ce fait, une structure horizontale, à l'inverse des têtes utilisées dans les dispositifs tels que celui de la figure 1 où la structure est verticale. Cela signifie que le bobinage servant à la création d'une induction magnétique ou à la formation d'une tension à partir de la variation d'un flux magnétique, doit être disposé dans un plan parallèle au plan de vol. Les principales étapes d'un procédé possible de réalisation d'une telle tête sont illustrées sur les figures 3 à 6.

La figure 3 d'abord, montre une plaquette de silicium 20, avec une couche de silice 22 et une couche magnétique 28. Dans cette dernière couche, on grave une tranchée 30 en forme de huit qui dégage deux pièces polaires 34a et 34b. Dans la tranchée, on réalise un double bobinage spiralé 31 et 32 qui entoure les deux pièces polaires 34a et 34b. La tranchée 30 est ensuite remplie d'isolant 36. Les connexions de sortie du bobinage sont formées par des conducteurs 33.

Sur l'ensemble est déposée ensuite une couche de résine qui est gravée pour constituer une marche 38 (figure 4). Cette marche présente un flanc 36 situé entre les pièces polaires. Une couche d'un matériau amagnétique 40 est ensuite déposée sur l'ensemble.

Cette couche amagnétique est enlevée sauf sur le flanc 36, ce qui laisse subsister une paroi verticale 42 (figure 5). Sont déposées ensuite une nouvelle couche magnétique 44, identique à la couche 28 et une couche de protection 46. Ces deux couches forment un bossage sur la paroi 42.

Cette structure est ensuite sectionnée dans la couche 46 pour faire apparaître deux pièces polaires d'écriture et de lecture 51 et 52 séparées par la paroi amagnétique 42. La tête horizontale est alors constituée.

## Revendications

1. Procédé de réalisation de dispositifs d'écriture et de lecture comprenant les opérations suivantes :

a) on part d'une plaquette semi-conductrice en silicium (10) ayant deux faces parallèles (C, C') d'orientation cristallographique [100],

b) on réalise sur l'une des faces (C, C') des circuits intégrés amplificateurs (12) par un procédé de diffusion, ce circuit possédant des connexions d'entrée-sortie (14),

c) on réalise sur la face (C) destinée à constituer un plan de vol, des têtes d'écriture et de lecture (11) par les opérations suivantes :

— on dépose sur la face (C) de la plaque semi-conductrice en silicium (10) une couche isolante (22),

— on dépose sur la couche isolante (22) une première couche magnétique (28),

— on grave dans la première couche magnétique (28) une tranchée (30) en forme de huit qui dégage deux premières pièces polaires (34a, 34b),

— on réalise dans la tranchée (30) un double bobinage spiralé (31, 32) entourant les premières pièces polaires (34a, 34b), ce bobinage étant situé dans un plan parallèle au plan de vol,

— on remplit la tranchée par un isolant (36),

— on forme des connexions d'entrée-sortie de bobinage (33) sur la couche isolante (22),

— on dépose sur l'ensemble une couche de matériau isolant (38) et on grave cette couche pour constituer une marche présentant un flanc (36) situé entre les premières pièces polaires,

— on dépose une couche de matériau amagnétique (40) sur l'ensemble,

— on enlève cette couche amagnétique (40) sauf sur le flanc (36), ce qui laisse subsister une paroi verticale (42),

— on dépose une seconde couche magnétique (44),

— on dépose une couche de protection (46), la seconde couche magnétique (44) et la couche de protection (46) formant un bossage sur la paroi verticale (42),

— on sectionne le bossage dans la couche de protection (46) pour faire apparaître deux secondes pièces polaires (51, 52) séparées par la paroi verticale (42),

d) on réalise des interconnexions (15) entre les connexions d'entrée-sortie (13) des têtes (11) et les connexions d'entrée-sortie (14) des circuits intégrés (12),

e) on grave des profils de vol dans la plaquette semi-conductrice en silicium (10) sur la face (C) portant les têtes d'écriture-lecture (11),

f) on découpe les divers ensembles tête d'écriture et de lecture (11) — circuit intégré (12) pour obtenir autant de dispositifs d'écriture et de lecture.

2. Procédé selon la revendication 1, caractérisé par le fait que l'on réalise les circuits intégrés (12) sur une face (C') de la plaquette semi-conductrice en silicium (10) et les têtes d'écriture et de lecture (11) sur l'autre face (C) et l'on réalise les connexions (15) entre circuit intégré et tête d'écriture et de lecture en traversant de part en part la plaquette semi-conductrice en silicium (10).

## Claims

1. Process for the production of read — write devices comprising the following operations :

(a) silicon semiconductor wafer (10) having two parallel faces (C, C') of crystal orientation [100],

(b) on one of the face (C, C') amplifier integrated circuits (12) are produced by a diffusion process, said circuit having input-output connections (14),

(c) on face (C) for forming a displacement plane are produced read-write heads (11) by the following operations :

— on face (C) of the silicon semiconductor wafer (10) is deposited an insulating layer (22),

— on the insulating layer (22) is deposited a first magnetic layer (28),

— in the first magnetic layer (28) is etched a figure of eight trench (30) freeing two first pole pieces (34a, 34b),

— in the trench (30) is formed a double helical coil (31, 32) surrounding the first pole pieces (34a, 34b), said coil being located in a plane parallel to the displacement plane,

— the trench is filled with an insulant (36),

— coil input-output connections (33) are formed on the insulating layer (22),

— on this entity is then deposited an insulating material layer (38), which is etched to form a step having a flank (36) located between the first pole pieces,

— an amagnetic material layer (40) is deposited on the entity,

— said amagnetic layer (40) is removed, except on flank (36), which leaves behind a vertical wall (42),

— a second magnetic layer (44) is deposited,

— a protective layer (46) is deposited, the second magnetic layer (44) and the protective layer (46) forming a boss on the vertical wall,

— the boss is cut in the protective layer (46), so that two second pole pieces (51, 52) appear separated by the vertical wall (42),

(d) interconnections (15) are formed between the input-output connections (13) of heads (11) and the input-output connections (14) of the integrated circuits (12),

(e) displacement profiles are etched in the silicon semiconductor wafer (10) on face (C) carrying the read-write heads (11),

(f) the various read-write head (11) integrated circuit (12) assemblies are cut to obtain the same number of read and write devices.

2. Process according to claim 1, characterized in that integrated circuits (12) are produced on one face (C') of the silicon semiconductor wafer (10) and the read-write heads (11) are produced on the other face (C) and connections (15) are formed between the integrated circuit and the read-write head whilst passing completely through the silicon semiconductor wafer (10).

## Patentansprüche

1. Verfahren zur Herstellung von Schreib- und Lesevorrichtungen mit folgenden Verfahrensschritten :

a) man geht von Halbleiterscheibe (10) aus Silizium mit zwei parallelen Seiten (C, C') der kristallographischen Orientierung [100] aus,

b) man stellt auf einer der Seiten (C, C') integrierte Verstärkerschalterkreise (12) mittels eines Diffusionsverfahren her, wobei dieser Schaltkreis Eingangs- Ausgangsanschlüsse (14) aufweist,

c) man stellt auf der für die Gleitfläche bestimmten Seite (C) Schreib- und Leseköpfe (11) mittels folgender Verfahrenschritte her :

— man bringt auf die Seite (C) der Halbleiterscheibe (10) aus Silizium eine Isolierschicht (22) auf,

— man bringt auf die Isolierschicht (22) eine erste magnetische Schicht (28) auf,

— man ätzt in die erste magnetische Schicht (28) ein Graben in der Form einer Acht, der zwei erste Polstücke (34a, 34b) freilegt,

— man bringt in dem Graben (30) eine doppelte spiralförmige Spule (31, 32) auf, die die ersten Polstücke (34a, 34b) umgibt, wobei sich diese Spule in einer Fläche parallel zur Gleitfläche befindet,

— man füllt den Graben mit einem Isolator (36) auf,

— man bildet Eingangs- Ausgangsverbindungen (33) für die Spule auf der isolierenden Schicht (22),

— man bringt auf die gesamte Anordnung eine Schicht (38) aus Isoliermaterial auf und man ätzt diese Schicht so, daß eine Stufe entsteht, die eine zwischen den ersten Polstücken liegende Flanke (36) darstellt,

— man bringt auf die gesamte Anordnung eine Schicht (40) eines unmagnetischen Materials auf,

— man entfernt diese unmagnetische Schicht (40) außer auf der Flanke (36), was eine vertikale Wand (42) bestehen läßt,

— man bringt eine zweite magnetische Schicht (44) auf,

— man bringt eine Schutzschicht (46) auf, wobei die zweite magnetische Schicht (44) und die Schutzschicht (46) einen Höcker auf der vertikalen Wand (42) bilden,

— man schneidet den Höcker in der Schutzschicht (46) ab, um zwei zweite Polstücke (51, 52) erscheinen zu lassen, die durch die vertikale Wand (42) getrennt sind,

d) man stellt Verbindungen (15) zwischen den Eingangs-Ausgangsverbindungen (13) der Köpfe (11) und den Eingangs- Ausgangsverbindungen (14) der integrierten Schaltkreise (12) her,

e) man ätzt Flugprofile in die Halbleiterscheibe (10) aus Silizium auf die Seite (C), die die Schreib-Leseköpfe (11) tragen,

f) man trennt die verschiedenen Gruppen aus Schreib-Lesekopf (11) — integrierter Schaltung (12), um ebensoviele Schreib-Lesevorrichtung zu erhalten.

2. Verfahren nach Anspruch 1, gekennzeichnet durch die Tatsache, daß man die integrierten Schaltkreise (12) auf einer Seite (C') der Halbleiterscheibe (10) aus Silizium und die Schreib-Leseköpfe (11) auf der anderen Seite (C) bildet und daß man die Verbindungen (15) zwischen integriertem Schaltkreis und Schreib-Lesekopf so bildet, daß sie die Halbleiterscheibe (10) aus Silizium von einer Seite zur anderen durchqueren.

FIG. 1

FIG. 2

1

FIG.3

FIG.4

FIG.5

FIG.6